# EUROPEAN PATENT APPLICATION

(11) **EP 2 141 722 A1**
(43) Date of publication of application: **06.01.2010**
(21) Application number: 08721480.5
(22) Date of filing: 06.03.2008
(51) Int. Cl.: H01H 36/00, H01H 13/702

(54) **KEY SEAT**

(30) Priority: 20.04.2007 JP 2007112405
(71) Applicant: SUNARROW LTD., Chuo-ku, Tokyo 104-0032 (JP)
(72) Inventor: SATO, Ryo, Mitsuke-shi Niigata 954-0076 (JP)
(74) Representative: Prinz & Partner
(86) International application number: PCT/JP2008/054060
(87) International publication number: WO 2008/132879

(57) **Abstract**

There is disclosed a key sheet in which a shape of element for the touch sensor, position where the element for the touch sensor are to be disposed and the number of the elements for the touch sensor to be disposed can freely be determined. In a key sheet including a key base and a key top arranged on a front surface of the key base, the key base is provided with a pattern detecting sensor target position having an element for a touch sensor.

## Description

### BACKGROUND OF THE INVENTION

### 1. Field of the Invention

The present invention relates to a key sheet for use in an electronic device such as a cell phone (including a so-called PHS), a portable information terminal (a personal digital assistance (PDA) or the like), a portable audio, a remote controller for a home electric appliance, a game player or a keyboard.

### 2. Description of the Related Art

At present, an input device using a touch sensor has been developed. For example, in Patent Document 1, there is disclosed an input device for operating a display device from the outside, which includes a plurality of operating portions disposed on an operation surface; a plurality of touch sensors which are disposed corresponding to backsides of these operating portions and which detect that finger come in contact with the operating portions; and a plurality of switch elements which are disposed corresponding to backsides of these touch sensors and which are pressed via the touch sensors at a time where the operating portions are pressed.

[Patent Document 1] Japanese Patent Application Laid-Open No. 2007-65993

However, in the Patent Document 1, in a case where the finger comes in contact with the operating portion (key top), the touch sensor (i.e., element for the touch sensor) detects this contact. The elements for the touch sensor are disposed on the switch elements (metal domes or the like), so that the number of the elements for the touch sensor and positions where the elements for the touch sensor are to be disposed depend on the number of the switch elements or positions of the switch elements, that is, the number of the operating portions or positions of the operating portions. In consequence, there have been restrictions on the number of the elements for the touch sensor and the positions where the elements for the touch sensor are to be disposed. There are sometimes restrictions on a shape of the elements for the touch sensor. Therefore, in the input device of Patent Document 1, the shape of the elements for the touch sensor, the positions where the elements for the touch sensor are to be disposed and the number of the elements for the touch sensor to be disposed cannot freely be determined.

### SUMMARY OF THE INVENTION

The present invention has been developed in view of the above-mentioned problems, and an object thereof is to provide a key sheet in which a shape of elements for the touch sensor, positions where the elements for the touch sensor are to be disposed, and the number of the elements for the touch sensor to be disposed can freely be determined.

To achieve the object, according to the present invention, there is provided a key sheet comprising: a key base, and a key top arranged on a front surface of the key base;
wherein the key base is provided with a pattern detecting sensor target position having an element for a touch sensor.

Moreover, the key sheet according to the present invention is **characterized in that** the key base includes one sheet-like member, and
the pattern detecting sensor target position is disposed on a front surface and/or a back surface of the sheet-like member.

Furthermore, the key sheet according to the present invention is **characterized in that** the key base includes a plurality of sheet-like members superimposed in a vertical direction, and
the pattern detecting sensor target position is disposed on a front surface and/or a back surface of one of the plurality of sheet-like members.

In addition, the key sheet according to the present invention is **characterized in that** the pattern detecting sensor target position is disposed on the front surface and the back surface of the sheet-like member,
the pattern detecting sensor target position disposed on the front surface includes row or column having the element for the touch sensor, and
the pattern detecting sensor target position disposed on the back surface includes column or row having the element for the touch sensor.

In addition, the key sheet according to the present invention is **characterized in that** the key base has a light guide function.

Moreover, the key sheet according to the present invention is **characterized in that** the key base further includes a protective layer which protects at least a part of the pattern detecting sensor target position.

Furthermore, the key sheet according to the present invention is **characterized in that** at least a part of the pattern detecting sensor target position is superimposed on/over at least a part of presser which abuts on or is secured to position corresponding to the key top on the back surface of the key base.

According to the key sheet of the present invention, the key base is provided with the pattern detecting sensor target position having the element for the touch sensor, whereby the pattern detecting sensor target position can be superimposed on/over the key top, and a shape of the pattern detecting sensor target position is not restricted by position or the like of the key top. Therefore, there is not any restriction on position or a shape of the element for the touch sensor to be disposed. In consequence, the shape of the element for the touch sensor, the position of the element for the touch sensor to be disposed and the number of the elements for the touch sensor to be disposed can freely be determined.

### BRIEF DESCRIPTION OF THE DRAWINGS

Fig. 1 is a perspective view showing an exploded state of one example of a key sheet according to a first embodiment, and a substrate on which this key sheet is to be arranged;
Fig. 2 is an enlarged sectional view showing one example of the key sheet according to the first embodiment, and a substrate provided with this key sheet;
Fig. 3 is a perspective view of a cell phone in a case where one example of the key sheet according to the first embodiment is incorporated in the cell phone as an electronic device;
Fig. 4(a) is a diagram showing one example of a front surface of a sheet-like member provided with one example of a pattern detecting sensor target position, and Fig. 4(b) is a diagram showing one example of a back surface of the sheet-like member provided with one example of the pattern detecting sensor target position;
Fig. 5(a) is a diagram showing one example of a positional relation of the front surface of the sheet-like member provided with the pattern detecting sensor target position and key tops, broken lines show the key tops, Fig. 5(b) is a diagram showing one example of a positional relation of the back surface of the sheet-like member provided with the pattern detecting sensor target position and pressers, and broken lines show the pressers;
Fig. 6(a) is a diagram showing one example of the front surface of the sheet-like member provided with one example of the pattern detecting sensor target position, and Fig. 6(b) is a diagram showing one example of the back surface of the sheet-like member provided with one example of the pattern detecting sensor target position;
Fig. 7(a) is a diagram showing one example of the front surface of the sheet-like member provided with one example of the pattern detecting sensor target position, and Fig. 7(b) is a diagram showing one example of the back surface of the sheet-like member provided with one example of the pattern detecting sensor target position;
Fig. 8 is a diagram showing one example in which the pattern detecting sensor target position is disposed on the front surface or the back surface of the sheet-like member;
Fig. 9 is a perspective view showing one example of the key sheet according to the first embodiment;
Fig. 10 is a perspective view showing an exploded state of one example of a key sheet according to a second embodiment, and a substrate on which this key sheet is to be arranged;
Fig. 11 is an enlarged sectional view showing one example of the key sheet according to the second embodiment, and a substrate provided with this key sheet;
Fig. 12 is a perspective view showing an exploded state of one example of a key sheet according to a third embodiment, and a substrate on which this key sheet is to be arranged; and
Fig. 13 is an enlarged sectional view showing one example of the key sheet according to the third embodiment, and a substrate provided with this key sheet.

### DESCRIPTION OF THE PREFERRED EMBODIMENT

One example of an embodiment of the present invention will be described with reference to the drawings. It is to be noted that in the drawings, similar, corresponding or generic components are denoted with the same reference numerals. In the drawings, where there are plurality of similar, corresponding or generic components, a part of them is denoted with the reference numeral. Furthermore, a key sheet according to the present invention is not limited to the following embodiment. Needless to say, the embodiment can appropriately be modified within the scope of the present invention.

### (First Embodiment)

### (Constitution)

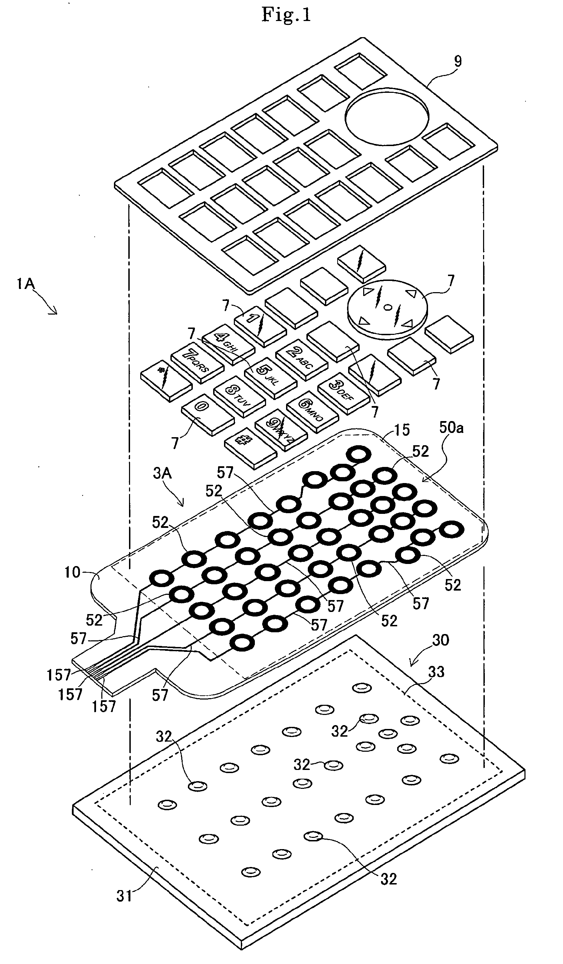

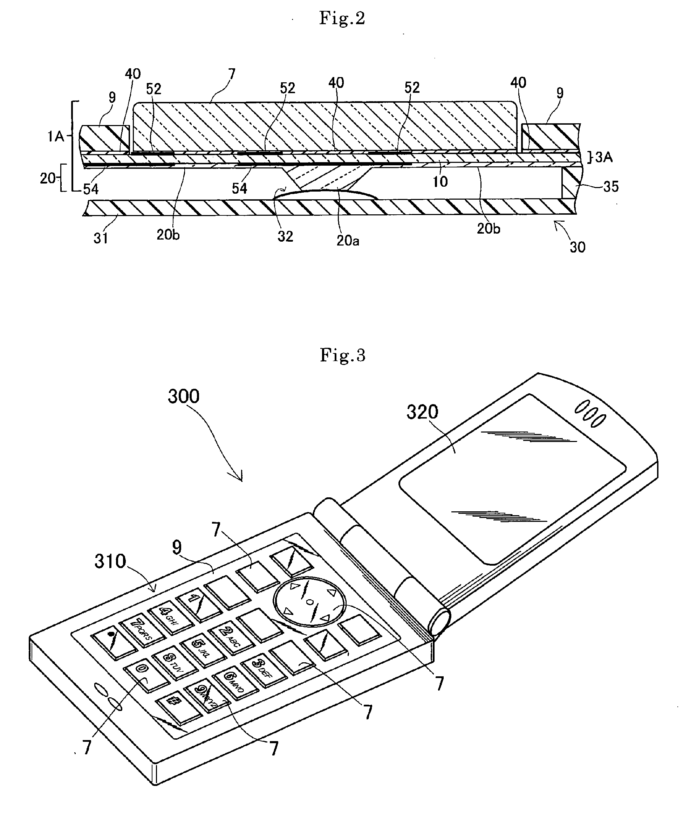

Fig. 1 is a perspective view showing an exploded state of one example of a key sheet according to a first embodiment, and a substrate on which this key sheet is to be arranged. Fig. 2 is an enlarged sectional view showing one example of the key sheet according to the first embodiment, and a substrate provided with this key sheet.

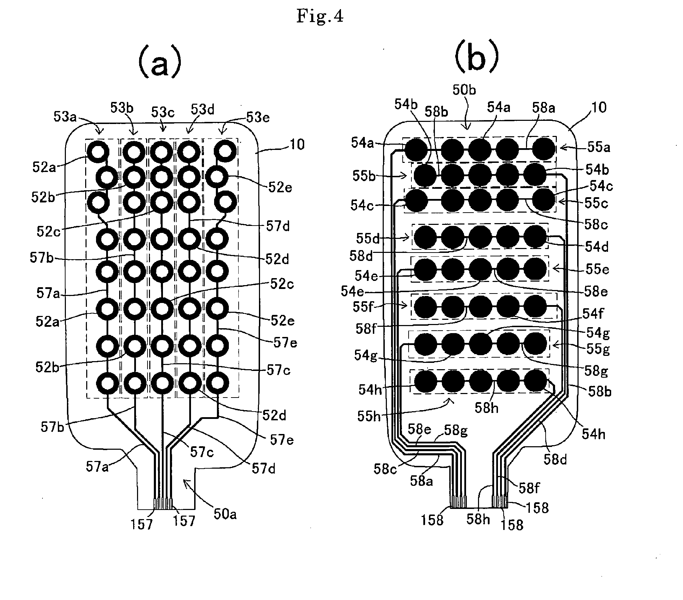

Fig. 3 is a perspective view of a cell phone in a case where one example of the key sheet according to the first embodiment is incorporated in the cell phone as an electronic device. Fig. 4(a) is a diagram showing one example of a front surface of a sheet-like member provided with one example of a pattern detecting sensor target position. Fig. 4(b) is a diagram showing one example of a back surface of the sheet-like member provided with one example of the pattern detecting sensor target position.

A key sheet 1A includes key tops 7, a cover member 9, a key base 3A and a presser layer 20. The key sheet 1A is arranged on a substrate 30 of a cell phone in a case where the key sheet is incorporated in the cell phone.

The cover member 9 is provided so as to reinforce the whole key sheet 1A and constitute a housing of the cell phone or the like. The cover member 9 is sometimes unnecessary in a case where the key tops 7 are exposed from through-holes provided in the housing of the cell phone. The cover member 9 is sometimes unnecessary in a case where the key tops 7 come very close to one another.

Moreover, the key tops 7 and the cover member 9 are sometimes integrated to form one sheet-like member. In this case, regions of the sheet-like member representative of figures, characters, symbols, pictures or the like, regions corresponding to pressers 20a or the like are the key tops, and another region is the cover member.

The key tops 7 constitute multidirectional (cursor) key, ten keys, functional keys or the like, respectively. One or more key tops 7 may be arranged, and a plurality of key tops are usually arranged.

The key tops 7 and the cover member 9 are formed of a material such as any type of synthetic resin, for example, a hard resin, or any type of glass. The hard resin is formed of a material basically having a light transmitting property, and examples of the resin include a polycarbonate resin, a polyurethane resin, an acrylic resin, and a silicone resin. The figure, character, symbol, picture or the like are disposed on front surface or back surface of the key tops 7 by an appropriate method such as printing or painting.

The key tops 7 and the cover member 9 are arranged on the front surface (the surface on the side of the key tops 7) of the key base 3A by being secured thereto via a securing layer 40 constituted of a adhesion bond, an adhesive material or the like. The securing layer 40 is constituted of a hot melt layer disposed on the back surfaces (the surfaces on the side of the substrate 30) of the key tops 7, the cover member 9 and the like by, for example, printing. The front surface of the key base 3A is a front surface of a sheet-like member 10. The front surface of the sheet-like member 10 appropriately includes the front surface provided with a layer such as a protective layer 15 and/or a pattern detecting sensor target position 50a. The back surface of the key base 3A is a back surface of the sheet-like member 10. The back surface of the sheet-like member 10 includes the back surface provided with a layer such as the protective layer 15 and/or a pattern detecting sensor target position 50b.

The key base 3A includes the sheet-like member 10. Specifically, the key base 3A includes one sheet-like member 10, and does not include another sheet-like member.

The sheet-like member 10 is constituted of one film sheet or the like having a thickness of, for example, 0.05 mm or less. The sheet-like member 10 may be appropriately, for example, coated on at least a part of the front surface and/or the back surface with a certain layer. The sheet-like member 10 (or the film sheet) is constituted of an appropriate material, for example, any type of elastomer such as a thermoplastic polyurethane resin (TPU) or any type of synthetic resin such as polyethylene terephthalate (PET) by appropriate method.

The sheet-like member 10 may have a multilayer structure in which a plurality of film sheets are superimposed on one another. The above-mentioned layer may be disposed on the front surface and/or the back surface of one or more of a plurality of film sheets. The sheet-like member 10 is formed of one film sheet, whereby the key sheet 1A can more easily be formed, and the key sheet 1A can be thinned.

The key base 3A appropriately includes one or more layers disposed on the front surface and/or the back surface of the sheet-like member 10. This layer is, for example, a printed layer formed by the printing. For example, this printed layer is the protective layer 15 (see a broken line on the key base 3A in Fig. 1), which protects at least a part of the pattern detecting sensor target position 50a, especially elements for the touch sensor 52 and wires 57. The protective layer 15 is disposed on the front surface of the sheet-like member 10 so as to cover at least a part of the pattern detecting sensor target position 50a. However, instead of or in addition to this front surface, the back surface of the sheet-like member 10 may be provided with the protective layer so as to cover at least a part of the pattern detecting sensor target position 50b. The protective layer 15 is omitted from Figs. 2, 4 and 5.

The protective layer 15 disposed on the front surface of the sheet-like member 10 prevents, for example, at least a part of the pattern detecting sensor target position 50a, especially the elements for the touch sensor 52 and the wires 57, from being damaged by the key tops 7, the cover member 9 or the like. The protective layer 15 disposed on the back surface of the sheet-like member 10 prevents, for example, at least a part of the pattern detecting sensor target position 50b, especially elements for the touch sensor 54 and wires 58, from being damaged while the presser layer 20 is formed or being damaged by members disposed on the substrate 30 or the like.

The protective layer 15 disposed on the front surface (and/or the back surface) of the sheet-like member 10 prevents, for example, at least a part of the pattern detecting sensor target position 50a (and/or 50b), especially the elements for the touch sensor 52 (and/or 54) and/or the wires 57 (and/or 58) from being electrically influenced.

In a case where the above-mentioned damaging, electric influence and the like do not have to be considered, the protective layer 15 disposed on the front surface or the back surface of the sheet-like member 10 is appropriately unnecessary. Thus, the layer such as the protective layer 15 is not provided, whereby the key sheet 1A can be thinned.

The protective layer 15 is formed by the printing or the like using any type of paint or the like.

The front surface of the sheet-like member 10 is provided with the pattern detecting sensor target position 50a having the elements for the touch sensor 52, and the back surface of the sheet-like member 10 is provided with the pattern detecting sensor target position 50b having the elements for the touch sensor 54.

A cell phone 300 in which the key sheet 1A is incorporated has a touch sensor. Detection points in the touch sensor are constituted of the elements for the touch sensor 52 and 54. The front surfaces of the key tops 7 and the cover member 9 constitute an operation surface 310 of the touch sensor. The touch sensor is for use in detecting, with the detection points, positional (e.g., coordinate) information indicating that an operator touches and moves on this operation surface 310 with a sensor target such as a finger (for example touches and moves on the operation surface 310 to write characters on the surface with the finger). The touch sensor is constituted of a non-contact type touch sensor. Therefore, when the key sheet 1A is incorporated in the electronic device, the elements for the touch sensor 52 and 54 are not exposed on the operation surface 310, and are provided so as to hide under the key tops 7 and the cover member 9 (or a housing of an electronic device constituting the operation surface) (under the operation surface 310).

The positional information obtained in a case where the operator touches and moves on this operation surface 310 with the finger or the like is grasped using the touch sensor by a control section of the cell phone 300. Then, the control section performs predetermined processing based on this grasped positional information to reflect a processing result in a display screen such as a display screen 320.

For example, the control section grasps a character written by touching and moving on the operation surface 310 with the operator's finger by use of the touch sensor to display this written character in the display screen 320.

It is to be noted that the non-contact type touch sensor is constituted of, for example, a non-contact type electrostatic capacity system touch sensor. In the present embodiment, the touch sensor is the non-contact type electrostatic capacity system touch sensor.

The elements for the touch sensor 52 and 54 constitute the detection points in the touch sensor for use in detecting positions or the like of the operation surface 310 touched and moved by the operator with the finger or the like (the sensor target). The elements for the touch sensor 52, 54 are constituted of electrodes.

The pattern detecting sensor target position 50 (generically indicating 50a and 50b) is formed of a conductor such as copper, aluminum or conductive rubber, a transparent electrode such as indium tin oxide (ITO), or the like. A method for forming the pattern detecting sensor target position 50 is performed by an appropriate method such as sputtering or printing. The printing is performed as the forming method, whereby the pattern detecting sensor target position 50 can easily be formed. Furthermore, in a case where the printing is performed, a temperature of the sheet-like member 10 on which the pattern detecting sensor target position 50 is to be disposed does not rise, and the sheet-like member 10 can be formed even of a material which is easily thermally deformed. When the transparent electrode is employed in the pattern detecting sensor target position 50, the pattern is advantageous for the key sheet 1A of an illuminative type. In a case where the pattern detecting sensor target position 50 is provided using a conductor other than the transparent electrode, the pattern detecting sensor target position 50 can inexpensively be provided as compared with a case where the transparent electrode is used.

The pattern detecting sensor target position 50a has columns, each of which has elements for the touch sensor 52a to 52e, that is, columns 53a to 53e. The pattern detecting sensor target position 50b has rows, each of which has elements for the touch sensor 54a to 54h, that is, rows 55a to 55h.

The pattern detecting sensor target position 50a or 50b appropriately includes the wires 57 or 58 connected to the elements for the touch sensor 52 or 54 for outputting electric signals from the key sheet 1A (e.g., to the control section of the cell phone or the like). The pattern detecting sensor target position 50a or 50b appropriately includes a connecting portion 157 or 158 connected to the outside so as to output the electric signals from the key sheet 1A through the wires 57 or 58.

A shape and the like of the patterns detecting sensor target position 50a and 50b will be described later.

The key sheet 1A further includes the presser layer 20. The presser layer 20 is disposed on the back surface of the key base 3A. It is to be noted that the presser layer 20 is not a constitutional element for the key base 3A.

The presser layer 20 includes the pressers 20a and thin portions 20b. One or more pressers 20a may be disposed. The pressers 20a are secured to the back surface of the key base 3A in positions corresponding to the key tops 7. The pressers 20a also correspond to switch portions 32 on the substrate 30. That is, the key tops 7, pressers 20a and switch portions 32 are provided corresponding to one another. A plurality of pressers 20a may be provided for one key top 7. The thin portions 20b are formed together in a case where the pressers 20a are provided.

The pressers 20a press the switch portions 32, and move downwards with a depressing operation of the key tops 7.

The thin portions 20b are not formed, depending on a method for forming the pressers 20a, for example, a forming method for forming the pressers 20a in advance to secure the pressers 20a to the back surface of the key base 3A. The pressers 20a need to have a minimum height (a height from a lower surface of the thin portion 20b to a lower surface of the presser 20a) for pressing the switch portions 32. However, if the thin portions 20b are not formed, the key sheet 1A can be thinnest.

It is also considered that the elements for the touch sensor are secured later around the pressers 20a so as to surround the pressers 20a, thereby providing the key sheet with the elements for the touch sensor. However, in this case, the height of each presser 20a is relatively reduced as much as a thickness of the element for the touch sensor, and a feeling of click in a case where the presser 20a deforms the switch portion 32 as described later is not easily brought. In consequence, a sense of operation of the electronic device including the key sheet 1A might be impaired. To secure a satisfactory sense of operation, the height of the presser 20a needs to be increased as much as the thickness of the element for the touch sensor, and the key sheet sometimes thickens as much as the thickness of the element for the touch sensor. The key base 3A is provided with the patterns detecting sensor target position 50a and 50b, whereby the height of the presser 20a does not have to be increased, and hence the key sheet 1A can be thinned. Moreover, the key sheet 1A capable of securing a predetermined sense of operation is obtained.

Even the presser layer 20 that is not provided with the thin portions 20b is referred to as the presser layer 20.

The presser layer 20 is formed of any type of, for example, synthetic resin such as an ultraviolet (UV) cured resin, a visible light curable resin, an electromagnetic wave cured resin or a silicone rubber by an appropriate method such as printing or injection molding.

The presser layer 20 is separately formed and secured to the back surface of the key base 3A via an adhesive layer or the like, or the presser layer is directly formed on the back surface of the key base 3A.

The presser layer 20 may be disposed on the switch portions 32 separately from the key base 3A. In this case, upper surfaces of the pressers 20a abut on the back surface of the key base 3A in positions corresponding to the key tops 7.

The substrate 30 is disposed on the side of the cell phone (the electronic device side), and appropriately includes a base material 31 and one or more switch portions 32. One or more switch portions 32 are formed by fixing metal domes with a film sheet 33 (shown by a dotted line in Fig. 1, and omitted from Fig. 2) attached to the base material 31. Moreover, each switch portion 32 includes a contact point (not shown) which is provided right under the metal dome and which short-circuits owing to the deformed metal dome. The substrate 30 also appropriately includes an electronic element (not shown), a circuit and the like. Then, the substrate 30 includes a control section, and is appropriately connected to the connecting portions 157, 158.

The film sheet 33 is made of PET, PC or the like. It is to be noted that the metal dome may be changed to a dish-like deformed member such as a poly dome.

The switch portion 32 is deformed by the downwardly moving presser 20a. Specifically, the downwardly moving presser 20a deforms the metal dome. Then, the deformed metal dome short-circuits the contact point right under the metal dome. This short-circuit enables an electric switching operation. Moreover, the deformation of the metal dome generates a sense of click at a time when the key top 7 is depressed.

A support member 35 is provided between the key sheet 1A and the substrate 30. This support member 35 is used in stably arranging the key sheet 1A on the substrate 30, and performs a function of a spacer. Moreover, the support member 35 may be provided between the adjacent pressers 20a so that in a case where the key top 7 moves downwards, another key top is prevented from being influenced. The support member 35 may be disposed integrally with this presser layer 20 in a case where the presser layer 20 is formed, or may be disposed on the substrate 30 side.

### (Element for the touch sensor)

Here, the elements for the touch sensor 52 and 54 will be described especially with reference to Fig. 4.

In Fig. 4(a), broken lines show constitutions of elements for the touch sensor and wires constituting columns. For example, the elements for the touch sensor 52a arranged in a substantially vertical direction in the broken line are connected to one another via wires 57a in the broken line, and the column 53a has a plurality of elements for the touch sensor 52a and a plurality of wires 57a in the leftmost broken line in Fig. 4(a). Similarly, the column 53b, 53c ... have a plurality of elements for the touch sensor 52b, 52c ... and a plurality of wires 57b, 57c ... in second, third ... broken lines from the left side in Fig. 4(a).

It is to be noted that the numbers of the elements for the touch sensor 52a, 52b, 52c ... and the numbers of the wires 57a, 57b, 57c ... in the columns 53a, 53b, 53c ... may be different from one another.

In Fig. 4(b), broken lines show constitutions of elements for the touch sensor and wires constituting rows. For example, the elements for the touch sensor 54a arranged in a substantially horizontal direction in the broken line are connected to one another via wires 58a in the broken line, and the row 55a has a plurality of elements for the touch sensor 54a and a plurality of wires 58a in the uppermost broken line in Fig. 4(b). Similarly, the row 55b, 55c ... have elements for the touch sensor 54b, 54c ... and wires 58b, 58c ... in second, third ... broken lines from the upside in Fig. 4(b).

It is to be noted that the numbers of the elements for the touch sensor 54a, 54b, 54c ... and the numbers of the wires 58a, 58b, 58c ... in the rows 55a, 55b, 55c ... may be different from one another.

The element for the touch sensor 52 (generically referring to 52a, 52b, 52c ...) faces the element for the touch sensor 54 (generically referring to 54a, 54b, 54c ...) via the sheet-like member 10, respectively. In other words, in a place where the column 53 (generically referring to 53a, 53b, 53c ...) intersects with the row 55 (generically referring to 55a, 55b, 55c ...), the element for the touch sensor 52 of the column 53 is positioned so as to face the element for the touch sensor 54 of the row 55. For example, the uppermost element for the touch sensor 52a faces the rightmost element for the touch sensor 54a. This also applies to the other elements for the touch sensor 52 and 54.

In a case where an electrostatic capacity of one of the columns 53 and an electrostatic capacity of one of the rows 55 change, the position of the operation surface which comes in contact with the sensor target can be grasped.
For example, in a case where the electrostatic capacities of the column 53c and the row 55e change, it is seen that the sensor target comes in contact with the position of the operation surface 310 corresponding to the fifth element for the touch sensor 52 and 54 from the upside in the middle column.

The patterns detecting sensor target position 50a and 50b may be disposed on the appropriately reversed front surface and back surface of the sheet-like member 10. That is, the pattern detecting sensor target position 50b provided with the rows 55 having the elements for the touch sensor 54 may be disposed on the front surface of the sheet-like member 10, and the pattern detecting sensor target position 50a provided with the columns 53 having the elements for the touch sensor 52 may be disposed on the back surface of the sheet-like member 10.

The column 53 has a shape extending in a substantially vertical direction, an obliquely extending shape, a meandering shape, a combined shape thereof or the like. The row 55 has a shape extending in a substantially horizontal direction, an obliquely extending shape, a meandering shape, a combined shape thereof or the like.
The column 53 and the row 55 may have such a shape that the column 53 intersects with the row 55 via the sheet-like member 10. The intersecting includes not only intersecting at right angles but also oblique intersecting. The shapes of the column 53 and the row 55 may appropriately be changed, and a portion of the column 53 and a portion of the row 55 in a region where the column 53 intersects with the row 55 are the elements for the touch sensor 52 and 54. Usually, a plurality of columns 53, rows 55 and elements for the touch sensor 52 and 54 are provided, respectively.

It is to be noted that the shape of the element for the touch sensor 52 disposed on the front surface of the sheet-like member 10 is preferably annular (a ring shape such as a circular ring (see Fig. 4(a)), and the outer periphery does not have to be circular). A shape of the element for the touch sensor 54 disposed on the back surface of the sheet-like member 10 is preferably a disc-like shape (see Fig. 4(b)), a polygonal shape or the like.

Moreover, the element for the touch sensor 52 constituting the column 53 sometimes does not have to face the element for the touch sensor 54 constituting the row 55, depending on the convenience of design of the touch sensor. That is, the element for the touch sensor 52 does not have to face the element for the touch sensor 54, and may deviate therefrom. In this case, a predetermined region of the column 53 or the row 55 may be the element for the touch sensor 52 or 54 as it is.

As described above, the patterns detecting sensor target position 50a and 50b are disposed on the front surface and the back surface of the sheet-like member 10, whereby the position of the operation surface with which the sensor target comes in contact can be detected using the column 53 and the row 55 having the elements for the touch sensor 52 and 54, respectively. In this case, there are such advantages that wiring can be facilitated and that position detecting processing can be facilitated, as compared with a case where the position of the operation surface with which the sensor target comes in contact are detected using individual element for the touch sensor.

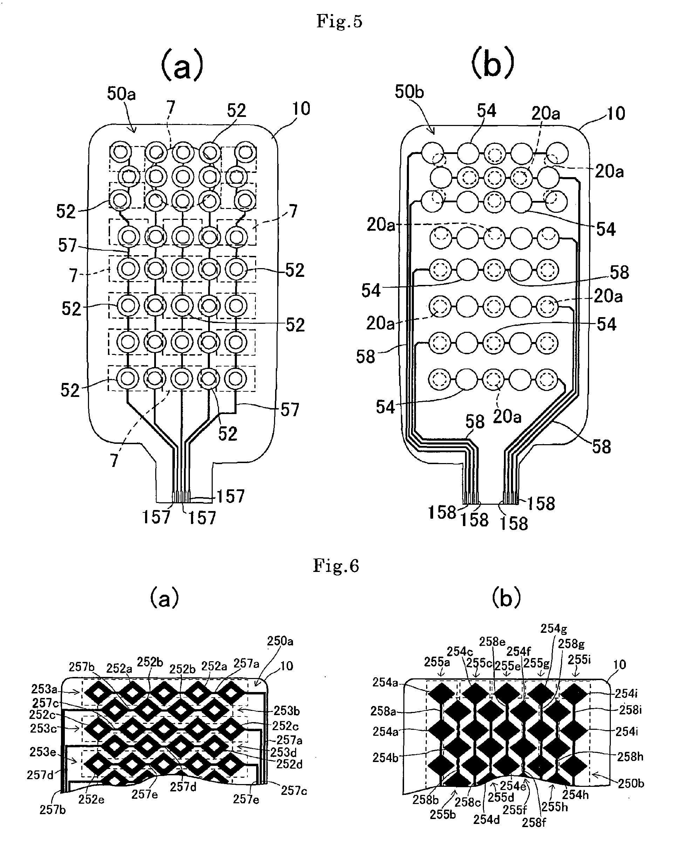

Here, Fig. 5(a) is a diagram showing one example of a positional relation by the front surface of the sheet-like member provided with the pattern detecting sensor target position and the key tops, and broken lines show the key tops. Fig. 5(b) is a diagram showing one example of a positional relation by the back surface of the sheet-like member provided with the pattern detecting sensor target position and the pressers, and broken lines show the pressers. It is to be noted that in Figs. 5(a) and 5(b), the elements for the touch sensor 52 and 54 are not filled.

As shown in Figs. 5(A) and 5(b), the sheet-like member 10 is provided with the pattern detecting sensor target position 50, whereby the pattern detecting sensor target position 50 can be superimposed on/over the key tops 7 and the pressers 20a (or regions which abut on the upper surfaces of the pressers 20a). This also applies to a case where the pattern detecting sensor target position is disposed on the front surface or the back surface of the sheet-like member 10.

Therefore, the sheet-like member 10 is provided with the pattern detecting sensor target position 50, that is, the key base 3A is provided with the pattern detecting sensor target position 50, whereby the pattern detecting sensor target position 50 can be superimposed on/over the key tops 7 and the pressers 20a (or the regions which abut on the upper surfaces of the pressers 20a). The shape of the pattern detecting sensor target position 50 is not restricted by the positions of the key tops 7 and the pressers 20a (the regions which abut on the upper surfaces of the pressers 20a). Therefore, there is not any restriction on the positions, numbers and shapes of the elements for the touch sensor 52 and 54. In consequence, the shapes of the elements for the touch sensor 52 and 54, the positions where the elements for the touch sensor 52 and 54 are to be disposed and the numbers of the elements for the touch sensor 52 and 54 to be disposed can freely be determined. Then, a detection sensitivity (precision) of a coordinate axial position of a portion where a sensor target such as the operator's finger comes in contact with the operation surface 310 can freely be set.

Moreover, when the pattern detecting sensor target position 50 is provided outside the key sheet 1A, there is a limit to thinning of a base material or the like to be provided with the pattern detecting sensor target position 50 so as to keep a strength or the like of this base material or the like. The key base 3A is provided with the pattern detecting sensor target position 50, whereby this strength can be obtained as the strength of the key sheet 1A, and the thinning of the key sheet 1A is realized. The pattern detecting sensor target position 50 can be formed to be thin. Then, especially the key base 3A is provided with the pattern detecting sensor target position 50, whereby a total thickness of the key sheet 1A from the lower surface of the presser 20a (or a spacer disposed around the presser 20a) to the front surface of the key top 7 (or the cover member 9) can be set to 0.4 mm to 1 mm. That is, the thin key sheet having a total thickness of 0.4 mm to 1 mm and provided with the pattern detecting sensor target position 50 can be provided.

Furthermore, when the pattern detecting sensor target position 50 is disposed outside the key sheet 1A, the pattern detecting sensor target position 50 needs to be separately disposed on the electronic device in which the key sheet 1A is to be incorporated. However, the key base 3A is provided with the pattern detecting sensor target position 50, whereby the pattern detecting sensor target position 50 is beforehand disposed in the key sheet 1A. Therefore, when this key sheet 1A is incorporated in the electronic device, the pattern detecting sensor target position 50 can be disposed in the electronic device. Therefore, as compared with a case where the pattern detecting sensor target position 50 is separately disposed in the electronic device in which the key sheet 1A is to be incorporated, an assembly step of the electronic device can be facilitated.

In addition, the key base 3A is provided with the pattern detecting sensor target position 50, whereby unlike a usual key sheet, an additional value that the electronic device can be provided with the touch sensor can be added to the key sheet 1A. Therefore, the key sheet 1A having a commercial value higher for a company which manufactures and sells the key sheet can be provided.

The key base 3A, especially the sheet-like member 10 is provided with the pattern detecting sensor target position 50, whereby the patterns detecting sensor target position 50 can be disposed on the front surface and the back surface of the sheet-like member 10 as described above. In consequence, a remarkably excellent key sheet can be obtained in which, for example, wiring can be facilitated and positional detection processing can be facilitated, furthermore in which the shape of the elements for the touch sensor, the positions where the elements for the touch sensor are to be disposed and the number of the elements for the touch sensor to be disposed can freely be determined and the touch sensor can freely be designed.

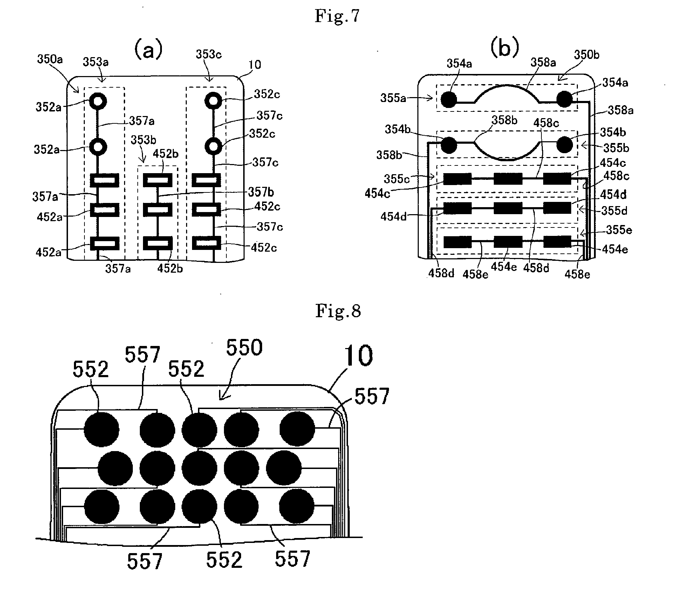

The shape of the pattern detecting sensor target position can appropriately be changed as described above. Fig. 6(a) is a diagram showing one example of the front surface of the sheet-like member provided with one example of the pattern detecting sensor target position. Fig. 6(b) is a diagram showing one example of the back surface of the sheet-like member provided with one example of the pattern detecting sensor target position. Fig. 7(a) is a diagram showing one example of the front surface of the sheet-like member provided with one example of the pattern detecting sensor target position, and Fig. 7(b) is a diagram showing one example of the back surface of the sheet-like member provided with one example of the pattern detecting sensor target position. The protective layer 15 and the like are omitted from Figs. 6 and 7.

In Fig. 6(a), broken lines show constitutions of elements for the touch sensor and wires constituting rows. For example, elements for the touch sensor 252a arranged in a substantially horizontal direction in the broken line are connected to one another via wires 257a in the broken line, and a row 253a has a plurality of elements for the touch sensor 252a and a plurality of wires 257a in the uppermost broken line in Fig. 6(a). Similarly, a row 253b (253c ...) has a plurality of elements for the touch sensor 252b (252c ...) and a plurality of wires 257b (257c ...) in the broken line of Fig. 6(a). A pattern detecting sensor target position 250a is constituted of the rows 253a, 253b ..., the wires 257a, 257b ... and the like.

In Fig. 6(b), broken lines show constitutions of elements for the touch sensor and wires constituting columns. For example, elements for the touch sensor 254a arranged in a substantially vertical direction in the broken line are connected to one another via wires 258a in the broken line, and a row 255a has a plurality of elements for the touch sensor 254a and a plurality of wires 258a in the leftmost broken line in Fig. 6(b). Similarly, a column 255b (255c ...) has a plurality of elements for the touch sensor 254b (254c ...) and a plurality of wires 258b (258c ...) in the broken line of Fig. 6(b), respectively. A pattern detecting sensor target position 250b is constituted of columns 255a, 255b ..., wires 258a, 258b ... and the like.

A shape of a element for the touch sensor 252 (generically referring to 252a, 252b ...) has a rhombic annular shape. A shape of a element for the touch sensor 254 (generically referring to 254a, 254b ...) has a rhombic shape. In Figs. 6(a) and 6(b), the elements for the touch sensor 252 and 254 are densely formed, and a sensitivity of a touch sensor can be improved.

In Fig. 7(a), broken lines show constitutions of elements for the touch sensor and wires constituting columns. For example, elements for the touch sensor 352a and 452a arranged in a substantially vertical direction in the broken line are connected to one another via wires 357a in the broken line, and a row 353a has a plurality of elements for the touch sensor 352a and 452a and a plurality of wires 357a in the leftmost broken line in Fig. 7(a). Similarly, a column 353b (353c) has a plurality of elements for the touch sensor 452b (352c and 452c) and a plurality of wires 357b (357c) in the broken line of Fig. 7(a), respectively. A pattern detecting sensor target position 350a is constituted of columns 353a, 353b ..., wires 357a, 357b ... and the like.

In Fig. 7(b), broken lines show constitutions of elements for the touch sensor and wires constituting rows. For example, elements for the touch sensor 354a arranged in a substantially horizontal direction in the broken line are connected to one another via a wire 358a in the broken line, and a row 355a has a plurality of elements for the touch sensor 354a and a plurality of wires 358a in the uppermost broken line in Fig. 7(b). Similarly, a row 355b (355c ...) has a plurality of elements for the touch sensor 354b (454c ...) and a plurality of wires 358b (358c ...) in the broken line of Fig. 7(b). A pattern detecting sensor target position 350b is constituted of the rows 355a, 355b ..., the wires 358a, 358b ... and the like.

A shape of an element for the touch sensor 352 (generically referring to 352a, 352b ...) has a circular annular shape. A shape of a element for the touch sensor 452 (generically referring to 452a, 452b ...) has a quadrangular ring shape. A shape of a element for the touch sensor 354 (generically referring to 354a, 354b ...) has a rhombic shape. A shape of a element for the touch sensor 454 (generically referring to 454c, 454d ...) has a quadrangular shape. In Figs. 6(a) and 6(b), the elements for the touch sensor 252 and 254 are coarsely formed.

The pattern detecting sensor target position may appropriately be disposed on the front surface or the back surface of the sheet-like member 10. This case will be described with reference to Fig. 8. Fig. 8 is a diagram showing one example in which one example of the pattern detecting sensor target position is disposed on the front surface or the back surface of the sheet-like member. The protective layer 15 and the like are omitted from Fig. 8.

A pattern detecting sensor target position 550 includes a plurality of elements for the touch sensor 552. The pattern detecting sensor target position 550 appropriately includes wires 557 connected to the elements for the touch sensor 552, respectively, so as to output electric signals from the key sheet 1A (e.g., to a control section or the like of a cell phone). The pattern detecting sensor target position 550 appropriately includes a plurality of connecting portions (not shown) connected to the outside so as to output, from the key sheet 1A, the electric signals transmitted through the wires 557. A shape of the pattern detecting sensor target position 550 can appropriately be changed.

When the pattern detecting sensor target position 550 is disposed on the front surface or the back surface of the sheet-like member 10, wiring sometimes becomes complicated and processing sometimes becomes complicated as compared with a case where the patterns detecting sensor target position 50a and 50b are disposed on the front surface and the back surface of the sheet-like member 10.

### (Appearance of Key Sheet)

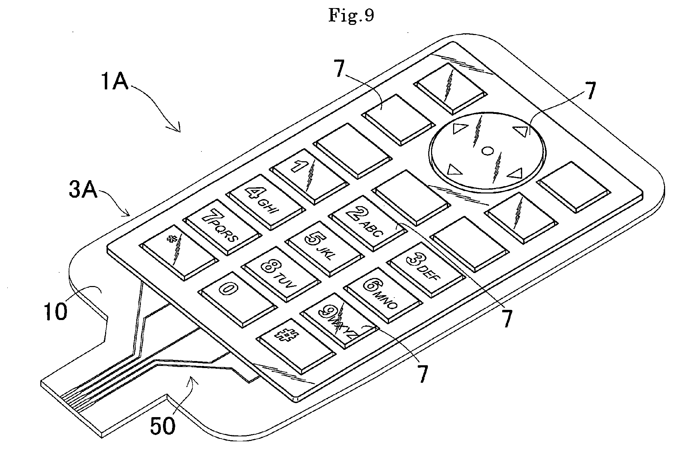

It is to be noted that Fig. 9 is a perspective view showing one example of the key sheet according to the first embodiment. It is to be noted that the protective layer 15 is omitted. As in this key sheet 1A, the key tops 7 and the like together with the cover member 9 are secured to the front surface of the key base 3A including the sheet-like member 10 and the pattern detecting sensor target position 50 to constitute the integral key sheet 1A.

### (Others)

When the key sheet 1A is an illuminative key sheet, a member constituting the key sheet 1A appropriately has a light transmitting property. Moreover, from a viewpoint of design, the cover member 9 may have a light transmitting property or a light blocking property.

Moreover, a light blocking layer (light is blocked so that any light from a predetermined light source does not leak from an extra portion, and the layer includes a layer formed by direct printing or the like with respect to the key base 3A or a layer formed separately from the key base 3A) may appropriately be disposed in a necessary place.

In the first embodiment, the key base 3A includes one sheet-like member 10, so that the key sheet can be thinned in a case where the key base 3A does not include any sheet-like member other than the sheet-like member 10. In this case, a key base of a conventional key sheet is only provided with the pattern detecting sensor target position 50 (including the protective layer 15, if necessary), whereby the key sheet 1A can be obtained. Therefore, the key sheet 1A can easily be obtained. Further in this case, a thickness of the key sheet 1A is larger than that of the conventional key sheet only as much as a thickness of the pattern detecting sensor target position 50 (including the protective layer 15, if necessary), and hence the thickness of the key sheet can be set to be substantially equal to that of the conventional key sheet (e.g., 0.4 mm to 1 mm).

### (Second Embodiment)

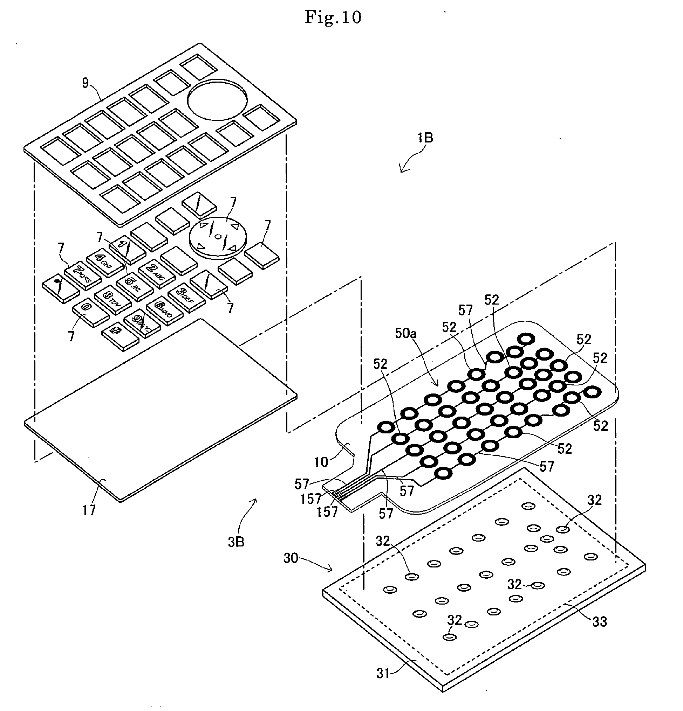

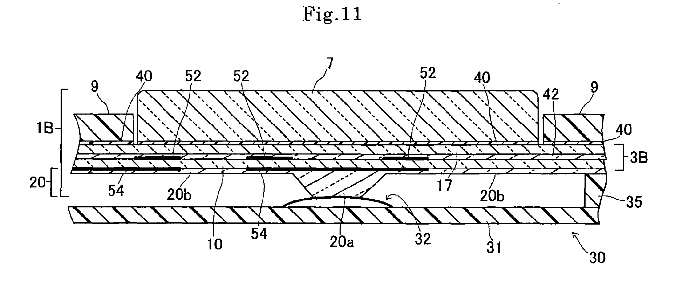

Fig. 10 is a perspective view showing an exploded state of one example of a key sheet according to a second embodiment, and a substrate on which this key sheet is to be arranged. Fig. 11 is an enlarged sectional view showing one example of the key sheet according to the second embodiment, and a substrate provided with this key sheet. It is to be noted that in Fig. 11, a film sheet 33 and a protective layer 15 are omitted.

The first embodiment is different from the second embodiment in that a key base 3B further includes a sheet-like member 17. That is, the key base 3B includes two sheet-like members 17 and 10 superimposed in a vertical direction. Then, pattern detecting sensor target position 50 are disposed on a front surface and a back surface of the sheet-like member 10 of the two sheet-like members.

The front surface of the sheet-like member 10 is secured to the back surface (which appropriately includes a back surface provided with a layer or the like in a case where the layer or the like are disposed) of the sheet-like member 17 via a securing layer 42 formed of an adhesion bond, an adhesive material or the like, whereby the sheet-like member 10 and the sheet-like member 17 are superimposed in the vertical direction. The front surface of the key base 3B is basically the front surface (which appropriately includes a front surface provided with a layer or the like in a case where the layer or the like are disposed) of the sheet-like member 17. The back surface of the key base 3B is basically the back surface of the sheet-like member 10.

The sheet-like member 17 is constituted of one film sheet or the like having a thickness of, for example, 0.05 mm or less. The sheet-like member 17 may be appropriately, for example, coated on at least a part of the front surface and/or the back surface with a certain layer. The sheet-like member 17 (including the film sheet) is constituted of an appropriate material of any type of elastomer such as a thermoplastic polyurethane resin (TPU) or any type of synthetic resin such as polyethylene terephthalate (PET) by an appropriate method.

In the second embodiment, the key base 3B includes the only two sheet-like members 17 and 10, and does not include any other sheet-like member, but the key base 3B may include three or more sheet-like members. In this case, the pattern detecting sensor target position 50 may be disposed on the front surface and the back surface (the front surface) of the sheet-like member 10 among a plurality of sheet-like members.

Another description of the second embodiment conforms to the first embodiment, and hence the description thereof is omitted. It is to be noted that the protective layer 15 to be disposed on the front surface of the sheet-like member 10 is not required, because the sheet-like member 17 can sometimes perform a function of the protective layer.

In the second embodiment, the key base 3B includes a plurality of sheet-like members, especially two sheet-like members, and does not include another sheet-like member, so that the sheet-like member 17 (or 10) is a conventional key base on which key tops 7 and the like are to be arranged, and the other sheet-like member 10 (or 17) can simply be added only to obtain a key sheet 1B. In consequence, the key sheet 1B can easily be obtained.

### (Third Embodiment)

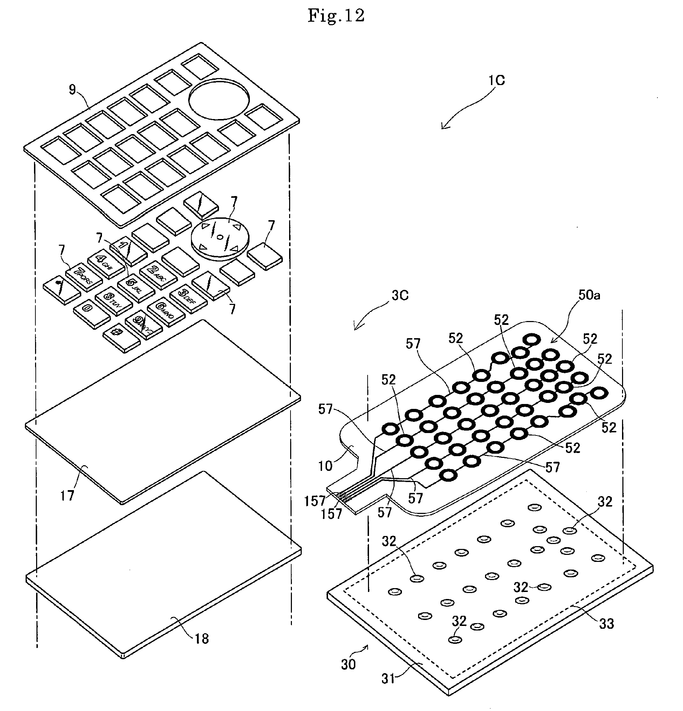

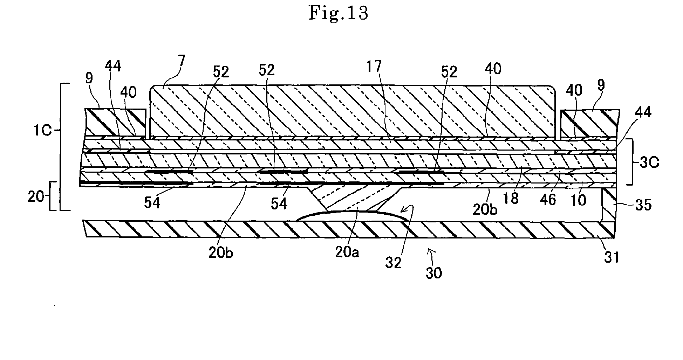

Fig. 12 is a perspective view showing an exploded state of one example of a key sheet according to a third embodiment, and a substrate on which this key sheet is to be arranged. Fig. 13 is an enlarged sectional view showing one example of the key sheet according to the third embodiment, and a substrate provided with this key sheet. It is to be noted that in Fig. 13, a film sheet 33 and a protective layer 15 are omitted.

The second embodiment is different from the third embodiment in that a key base 3C further includes a sheet-like member 18 having a light guide function, that is, in that a key base 3C further includes a sheet-like member 18 having a light guide function disposed above a pattern detecting sensor target position 50 (e.g., above a sheet-like member 10 provided with the pattern detecting sensor target position 50). That is, the key base 3C has a light guide (light conductor) function above the pattern detecting sensor target position 50. A front surface of the key base 3C is basically a front surface of a sheet-like member 17, and a back surface of the key base 3C is basically a back surface of the sheet-like member 10.

The sheet-like member 18 having the light guide function guides light from a predetermined light source in a case where a key sheet 1c is incorporated in an electronic device. The sheet-like member 18 having the light guide function is a member obtained by forming, in the form of a sheet, a resin having an excellent light transmitting property, for example, PET, PC, TPU, acryl or the like, and the sheet-like member 18 has, in portions corresponding to key tops 7, reflective portions for reflecting upwards the light transmitted from the light source through the sheet-like member 18 having the light guide function. The sheet-like member 18 having the light guide function is a sheet-like member provided with the light guide function.

The front surface of the sheet-like member 10 is secured to the back surface (which appropriately includes a back surface provided with a layer or the like in a case where the layer or the like are disposed) of the sheet-like member 18 having the light guide function via a securing layer 46 formed of a adhesion bond, an adhesive material or the like, whereby the sheet-like member 10 and the sheet-like member 18 having the light guide function are superimposed in a vertical direction. The back surface of the sheet-like member 17 is secured to the front surface (which appropriately includes a front surface provided with a layer or the like in a case where the layer or the like are disposed) of the sheet-like member 18 having the light guide function via a securing layer 44 formed of a adhesion bond, an adhesive material or the like, whereby the sheet-like member 17 and the sheet-like member 18 having the light guide function are superimposed in the vertical direction. It is to be noted that the securing layer 44 may be disposed on the whole upper surface of the sheet-like member 18 having the light guide function, but as shown in Fig. 13, the downside of the key tops 7 is preferably avoided in disposing the securing layer so that the light from the light guide 18 is not disturbed.

It is to be noted that a key sheet 1C is assumed as an illuminative key sheet, so that a member constituting the key sheet 1C and a layer such as the securing layer appropriate have a light transmitting property. However, in the present embodiment, the sheet-like member 18 having the light guide function is disposed above the pattern detecting sensor target position 50 in the key sheet 1C, so that a presser layer 20, the sheet-like member 10, the securing layer 46 and the pattern detecting sensor target position 50 do not especially require the light transmitting property. The sheet-like member 18 having the light guide function is disposed above the pattern detecting sensor target position 50, whereby uniform illumination can be realized. Moreover, a material of the pattern detecting sensor target position 50 does not have to be limited to a material having the light transmitting property, for example, a transparent electrode or the like. Moreover, the pattern detecting sensor target position 50 may be constituted of a material which is inexpensive as compared with, for example, the transparent electrode.

Another description of the third embodiment conforms to the first and second embodiments, and hence the description thereof is omitted. It is to be noted that the protective layer 15 is not required, because the sheet-like member 18 having the light guide function can sometimes perform a function of the protective layer.

In the third embodiment, the key base 3C further includes the sheet-like member 18 having the light guide function. Only three sheet-like members are used, and another sheet-like member is not used, so that the sheet-like member 17 (or 10) is a conventional key base on which the key tops 7 and the like are to be arranged, the other sheet-like member 10 (or 17) is added, and the sheet-like member 18 having the light guide function can simply be added only to obtain the key sheet 1C. In consequence, the key sheet 1C can easily be obtained.

Moreover, the sheet-like member 18 may not be disposed, and the sheet-like member 17 of the second embodiment may be provided with the light guide function. Furthermore, the sheet-like member 17 and the sheet-like member 18 having the light guide function may not be disposed, and the sheet-like member 10 of the first embodiment may be provided with the light guide function. In a case where a constitution in which the sheet-like member 10 is provided with the light guide function is employed, the pattern detecting sensor target position 50a to be disposed on the front surface of the sheet-like member 10 is preferably a transparent electrode or the like having the light transmitting property.

The expression that the key base is provided with the light guide function includes the meaning that at least one of the sheet-like members constituting the key base has the light guide function.

### (Others)

In the first to third embodiments, members and the like constituting the key sheet, for example, the key tops 7, the cover member 9, the sheet-like members 10, 17, the sheet-like member 18 having the light guide function, the protective layer 15, and the securing layers 40, 42, 44 and 46 preferably have an insulating property so that the function of the touch sensor is not disturbed.

## Claims

1. A key sheet comprising:
a key base,
and a key top arranged on a front surface of the key base;
wherein the key base is provided with a pattern detecting sensor target position having an element for a touch sensor.

2. The key sheet according to claim 1, wherein the key base includes one sheet-like member, and
the pattern detecting sensor target position is disposed on a front surface and/or a back surface of the sheet-like member.

3. The key sheet according to claim 1, wherein the key base includes a plurality of sheet-like members superimposed in a vertical direction, and
the pattern detecting sensor target position is disposed on a front surface and/or a back surface of one of the plurality of sheet-like members.

4. The key sheet according to claim 2 or 3, wherein the pattern detecting sensor target position is disposed on the front surface and the back surface of the sheet-like member,
the pattern detecting sensor target position disposed on the front surface includes row or column having the element for the touch sensor, and
the pattern detecting sensor target position disposed on the back surface includes column or row having the element for the touch sensor.

5. The key sheet according to any one of claims 1 to 4, wherein the key base has a light guide function.

6. The key sheet according to any one of claims 1 to 5, wherein the key base further includes a protective layer which protects at least a part of the pattern detecting sensor target position.

7. The key sheet according to any one of claims 1 to 6, wherein at least a part of the pattern detecting sensor target position is superimposed on/over at least a part of presser which abuts on or is secured to position corresponding to the key top on the back surface of the key base.
